Europäisches Patentamt

**European Patent Office**

**Office européen des brevets**

(11) Publication number: **0 042 006**
A1

# EUROPEAN PATENT APPLICATION

published in accordance with Art. 158(3) EPC

(21) Application number: **81900012.6**

(22) Date of filing: **08.12.80**

Data of the international application taken as a basis:

(86) International application number: **PCT/JP 80/00300**

(87) International publication number: **WO 81/01681 (25.06.81 81/15)**

(51) Int. Cl.³: **B 29 D 3/02**

(30) Priority: **07.12.79 JP 158999/79**

(43) Date of publication of application: **23.12.81**
**Bulletin 81/51**

(84) Designated Contracting States: **DE FR GB NL SE**

(71) Applicant: **TORAY INDUSTRIES, INC., 2, Nihonbashi-Muromachi 2-chome Chuo-ku, Tokyo 103 (JP)**

(72) Inventor: **KITANAKA, Minoru, 1-82, Ikegami-dai Midori-ku, Nagoya-shi Aichi 458 (JP)**
Inventor: **HIRAMATSU, Toru, 1415, Tsutsui Masaki-cho, Iyo-gun Ehime 791-31 (JP)**
Inventor: **IGARASHI, Tsuyoshi, 1-3-53, Kokubu, Otsu-shi Shiga 520 (JP)**

(74) Representative: **Ritter, Stephen David et al, Mathys & Squire 10 Fleet Street, London EC4Y 1AY (GB)**

(54) **MANUFACTURE OF MOLDED ARTICLES OF CARBON FIBER-REINFORCED THERMOPLASTIC RESIN.**

(57) A method of manufacturing fiber-reinforced resin articles, the principal object being to manufacture such articles that exhibit excellent properties, at a high level of productivity. The molded articles of carbon fiber-reinforced thermoplastic resin are manufactured by forming a cloth-like body, comprising elongated carbon fibers, into a unitary body with a thermoplastic resin to obtain a composite sheet, shaping the composite sheet into a desired configuration at a temperature higher than the melting point or softening point, but lower than the decomposition temperature, of the thermoplastic resin, and cooling the resulting article.

Since the composite sheet is shaped into a three-dimensional structure at a suitable temperature, a high-productivity can be achieved in manufacturing fiber-reinforced resin molded articles that are light in weight and possess excellent mechanical properties such as an outstanding youngs's modulus and modulus of elasticity.

SPECIFICATION


METHOD FOR PREPARING CARBON FIBER REINFORCED

THERMOPLASTIC MOLDED ARTICLES


Technical Field

This invention relates to a method for preparing in high productivity carbon fiber reinforced thermoplastic resin molded articles having an excellent performance by forming a composite sheet which consists of a carbon fiber fabric and a thermoplastic resin.


Background Arts

For improving the performances of plastics, such as mechanical properties, a method which consists of incorporating a fibrous reinforcing agent such as glass fibers into plastics, is well known and these reinforced plastics is called FRP and FRTP. Because of their superior properties, they are widely used as various mechanical parts, such as automotive parts, aircraft parts and electrical machinery parts, and also sporting goods.

As one method for manufacturing FRP, it is known impregnating a thermosetting monomer and catalyst into a fabric consisting of carbon fiber filaments, e.g. a carbon

0042006

fiber woven fabric, followed then curing the monomer in the composite. This composite material exhibits excellent mechanical properties such as elastic modulus, but there is a problem in this method that a large amount of time is required for the molding and the productivity of this method is largely decreased because it is necessary to cure the monomer by polymerization and crosslinking reaction. And also this method still involves a problem. The impregnated monomer and polymerization catalyst undergo changes in the course of time thus leading to deterioration in mechanical properties and moldability of the composite material, and in order to avoid these disadvantages it is necessary that the carbon fiber fabric impregnated with the monomer and polymerization catalyst should be kept under a strict storage condition before molding.

On the other hand, as a method of obtaining in high productivity a fiber reinforced plastics article there is known a method wherein chopped strands of a fibrous reinforcing agent are incorporated in a thermoplastic resin and the resulting blend is subjected to injection molding. According to this method, however, since fibers are cut at the step of molding, the reinforcing effect of fibers is so weak that not only the resulting molded article is insufficient in its mechanical properties but also in the case of using glass fibers the specific weight of the resulting

- 2 -

molded article becomes large and therefore the requirement of lightness cannot be satisfied.

As a method capable of preventing fibers from being cut at the step of incorporating of reinforcing fibers and thermoplastics and molding of the composite there is known a method wherein a glass fiber mat is incorporated with a thermoplastic resin. But molded articles obtained by this method are not light enough and are still insufficient in mechanical properties, particularly elastic modulus.

It is an object of this invention to remedy the drawbacks encountered in the conventional production of a composite molded article from a resin and a fibrous reinforcing agent.

It is another object of this invention to provide a method for preparing a fiber reinforced thermoplastic resin molded article superior in both productivity (moldability) and performance (mechanical properties and lightness) of the resulting product.

Other objects and effects of this invention will become apparent from the following description.

Disclosure of the Invention

The aforesaid objects of this invention are attained by a method for preparing a carbon fiber reinforced thermoplastic molded article wherein a composite sheet obtained by incorporating a fabric consisting substantially of carbon fiber filaments with a thermoplastic resin is heated to a temperature not lower than the melting point or softening point of the thermoplastic resin and below the decomposition temperature thereof, is shaped into a desired form and then cooled.

Best Form for Working the Invention

This invention will be described hereinunder more concretely.

Fabrics consisting substantially of carbon fiber filaments (hereinafter referred to simply as fabric) used in the invention indicate such as woven fabrics, knitted fabrics, braided fabrics and nettings composed of carbon fiber strands and nonwoven fabric composed of continuous filaments. For the preparation of these fabrics carbon fiber strands may be fabricated, or precursors of carbon fibers such as acrylic fibers, rayon fibers or pitch fibers or their oxidized fibers, may be manufactured into the fabrics or mats and then oxidized and/or carbonized. The carbon fibers which constitute the cloth may be subjected to various surface treatments to attain their close adhesion to a thermoplastic resin. Regarding binder or sizing agent used in carbon fiber fabrics in the commercial market; now almost of them prevent the impregnation of thermoplastic resins, so it is preferable that they be removed by flame treatment or other means.

The fabric may be partially mixed with inorganic fibers such as glass fibers, metallic fibers and asbestos fibers and as the case may be with synthetic fibers such as polyethylene terephthalate and polyamide fibers. Particularly in woven fabrics, by changing weaving conditions such as the kind of warp and weft, weaving density, weight per unit area and textile weave, it is possible to impart anisotropy to the reinforcing effect, and it is also possible to develop a reinforcing effect substantially equal to the unidirectional reinforcement by carbon fibers. Also, a cloth formed of a different kind of fiber may be laminated in a small quantity. It is important to use a fabric comprising carbon fiber filaments. The use of carbon chopped fibers is not desirable because the process preparing the composite sheet would become complicated and it would be impossible to obtain molded articles superior in mechanical properties.

As the thermoplastic resin used in the invention there may be used any resin having thermoplasticity. Particularly preferred are polyamides such as nylon 6, 11, 12, 66, 610 and 612, thermoplastic polyesters such as polyethylene terephthalate and polybutylene terephthalate, polycarbonates such as polybisphenol A carbonate, polyimide-amide resins, polyphenylene sulfide, polysulfone, polyphenylene oxide, polyolefins,

- 5 -

styrene resins and acrylic resins. These thermoplastic resins may be blended with additives to improve their properties such as heat stabilizers, weathering agents, ultraviolet stabilizers, antistatic agents, lubricants, mold release agents, coloring agents such as dyes or pigments, fillers, crystallization accelerators, nucleating agents, reinforcing chopped fibers, and as the case may be even crosslinking agents and foaming agents.

The incorporating ratio between the fabric and a thermoplastic resin is preferably such that the fabric in the resulting composite sheet is in the range of from 5% to 70%, particularly 20% to 60%, in terms of its volume fraction. If the volume fraction of the carbon fiber fabric is less than 5%, the effect of improvement of mechanical properties will be unsatisfactory, while its volume fraction larger than 70% is not desirable, either, because it would deteriorate the moldability of the composite sheet.

As the method of integrating the fabric with a thermoplastic resin there may be used a method wherein the fabric and the thermoplastic resin are laid on one after another and heat-pressed, a method wherein the thermoplastic resin is extruded over the fabric using a crosshead die and a method wherein the thermoplastic resin is extruded and directly laminated to the fabric. Among these methods, a heat pressing method is preferred because of its simplicity.

- 6 -

Particularly, from the view point of productivity a method in which the fabrics and thermoplastic sheets are laid on one after another and continuously feeded between a pair of metallic endless belts where laminated fabrics and thermoplastic sheets are continuously heated, compressed and cooled is preferred.

Molding of the composite sheet thus obtained is formed at a temperature not lower than the melting point or softening point of the resin and below the decomposition temperature thereof, but usually it is preferable that the composite sheet is preheated to such a temperature and then subjected to molding. If the molding temperature is lower than the melting point or softening point of the resin, the pressure required for molding will become larger, and a molding temperature above the decomposition temperature would cause deterioration of the resin and hence deterioration in mechanical properties of the resulting molded article.

For preheating the composite sheet there may be used heating ovens such as a hot-air oven, an infrared heating oven and an induction heating oven, a method wherein the composite sheet is contacted onto a hot plate, and a combination thereof.

There is no particular limit to the molding method for the preheated composite sheet, but as suitable methods there may be exemplified a method wherein the preheated sheet is compression-molded using a matched die, a method wherein the preheated sheet is passed through a profile die to obtain an continuous product having an desired cross section and a method wherein the preheated sheet is wound round a metallic tube or the like to obtain a tubular article. If required, the composite sheet may be locally heated and shaped, for example, it may be heated only in its peripheral portion followed by bending. At the step of molding the preheated sheet, it is advantageous from view point of productivity to maintain the temperature of mold, die, metallic tube on other molding tools lower than the melting point or softening point of the thermoplastic resin, because the preheated sheet is cooled simultaneously at the step of forming. Onto the surface of the shaping mold, die or metallic tube there may be applied a mold releasing agent to facilitate the removal or ejection of the molded article from the mold.

A further improvement of moldability and mechanical properties of the molded article can be expected by constituting the carbon fiber cloth from carbon fibers having a crimp ratio of 0.5% to 80%, particularly 1% to 75%. Particularly where the composite sheet is subjected to compression molding using a matched die, air-pressure forming, vacuum forming or drape forming, the speed of shaping is limited in order to avoid cutting of the cloth or its maldistribution in

- 8 -

the resin. But if a cloth consisting of carbon fibers having a crimp ratio between the above-defined range is used, the composite sheet is deformed easily following the shape of a mold and the carbon fibers are no longer cut even in a case of high-speed molding,so that a high-speed molding of an article having a complicated three-dimensional shape becomes possible and the molded article thereby obtained has superior mechanical properties.

The foregoing "crimp ratio of the fabric" has been determined in the following manner. The fabric is unravelled into its constituent carbon fiber strands, and with respect to the strands there are measured a length $\ell$ when applying a load of $6 \times 10^{-4}$ g. per denier and a length $\ell_0$ when applying a load of $1.4 \times 10^{-1}$ g. per denier, and the crimp ratio is calculated from the following equation:

$$\text{Crimp ratio of the carbon fiber fabric} = \frac{\ell_0 - \ell}{\ell_0} \times 100$$

In case the fabric is constituted from several kinds of carbon fiber strands having different crimp ratios, the crimp ratio of the fabric is defined by the weight average of crimp ratios determined in the above manner with respect to each carbon fiber strand.

The crimp ratio of fabric produced from carbon fiber strands usually is smaller than 0.5%, and carbon fiber fabric having a crimp ratio of 0.5% or more are produced in the following manner. An acrylic fiber, a rayon fiber, a pitch fiber, or an oxidized fiber thereof which is produced by heat treatment at 200-350°C in an oxidative atmosphere such as in air, is processed into a fabric, then the fabric is subjected to heat treatment at 200-350°C in an oxidative atmosphere such as in air, then carbonized at a temperature above 800°C in an inert gas such as nitrogen whereby a carbon fiber fabric having a crimp ratio of 0.5% to 80% is produced. In case the fabric was constituted from oxidized fibers, the fabric may be subjected directly to the carbonization treatment.

In the above method, when the strands undergo the carbonization treatment, the bends of the strands in the fabric are fixed, so that there is obtained a fabric having a large crimp ratio. The crimp ratio of a fabric depends on such factors as the thickness of the strands used, a shrink in the oxidation treatment and that in the carbonization treatment, textile weave and weight per unit area of the cloth. It is possible to design a cloth having a desired crimp ratio. Woven textiles are suitable as fabrics of a low crimp ratio, while knitting goods are suitable as fabrics of a high crimp ratio.

Working examples of this invention will be described hereinunder to further illustrate the invention.

Example 1

Six plies of a carbon fiber woven fabric ("Torayca" Cloth #6341, crimp ratio 0.2%, a product of Toray Industries Inc.) were exposed to flame of a gas burner for several seconds to burn off binder of the cloth and then laid up alternately with seven plies of nylon 6 sheets each 0.3 mm thick. The laminate was heated at 270°C under a pressure of 35 kg/cm$^2$ for 3 minutes between plane mold mounted in a hot press, then the mold was cooled to room temperature by transferring onto a cooling press wherein was flowing water at room temperature, while maintaining the pressure at 35 kg/cm$^2$ to obtain a composite sheet 2.5 mm thick. Then, a square 200 x 200 mm sheet was cut out from the composite sheet, preheated for 3 minutes in a circulating hot air oven set at 270°C and thereafter fed to a cup forming mold set at 120°C. The dimention of the cup was as follows, a bottom portion diameter of 100 mm, an upper opening portion diameter of 120 mm and a depth of 20 mm. The mold was closed at a speed of 2.5 mm/sec and the square sheet was cooled for 20 seconds at a pressure under about 100 kg/cm$^2$. The mold was then opened and the molded article (A) was taken out, which had a good appearance with no crease or the like present at the peripheral portion of the cup. This molding was performed in a very short time and the productivity of this process was quite excellent.

- 11 -

On the other hand, in place of the above carbon fiber fabric, fifteen plies of a glass fiber woven fabric ("MS-251," a product of Asahi Fiber Glass Co.) were laid up, without application of the flame treatment, alternately with sixteen nylon 6 sheets each 0.15 mm thick to obtain a composite sheet in the same way as above, and from the composite sheet there was prepared a cup-like molded article (B) in the same manner as above, whose surfaces and appearance were almost satisfactory.

Furthermore, nylon 6 pellets and chopped carbon fiber strands ("Torayca" T-300, a product of Toray Industries Inc.) at a volume ratio of 50:50 were fed to an extruder and melted and kneaded to obtain pellets, which in turn were melted and pressed to give a composite sheet 2.5 mm thick. From this composite sheet there was prepared a cup-like molded article (C) in the same way as above. The molded article (C) had a good surface gloss, but as a result of measurement of carbon fiber lengths in the molded article it was found that the fibers were finely cut to about 0.2 to 0.3 mm.

Then, test pieces were cut out from the bottom portions of the molded articles (A) through (C) and they were subjected to a bending test according to ASTM D-790, the results of which are set out in Table 1.

Table 1

| Molded Article | Fibrous Reinforcing Agent | | Flexural Modulus ton/mm$^2$ | Flexural Strength kg/mm$^2$ | Specific Gravity |
|---|---|---|---|---|---|
| | Kind | Volume Fraction(%) | | | |
| (A) | Carbon fiber fabric | 53 | 6.2 | 76 | 1.49 |
| (B) | Glass fiber fabric | 52 | 2.1 | 43 | 1.89 |
| (C) | Carbon chopped fiber | 50 | 2.3 | 18 | 1.47 |

From the results shown in Table 1 it is apparent that the molded article (A) prepared according to the method of this invention is remarkably superior in both lightness and mechanical properties.

Example 2

The procedure of Example 1 was repeated except that the nylon 6 sheets used therein were substituted by polybutylene terephthalate sheets each 0.25 mm thick and that the temperature of the cup forming mold was set at 150°C. As a result, there was efficiently obtained a polybutylene terephthalate molded article having a good appearance reinforced with the carbon fiber fabric. The volume fraction of the carbon fibers at the bottom portion of the molded article was 54%, and the flexural modulus and the flexural strength were 5.9 ton/mm$^2$ and 73 kg/mm$^2$, respectively.

Example 3

The procedure of Example 1 was repeated except that the nylon 6 sheets used therein were substituted by polyphenylene sulfide sheets each 0.3 mm thick and that the temperature of the composite sheet forming plate-like mold and that of the cup forming mold were set at 300°C and 200°C, respectively. As a result, there was obtained a molded article having a good appearance reinforced with the carbon fiber fabric. The volume fraction of the carbon fibers at the bottom portion of the molded article was 51%, and the flexural modulus and the fluxural strength were 5.4 ton/mm$^2$ and 65 kg/mm$^2$, respectively.

Example 4

A solution of a copolymer containing 99% polyacrylonitrile in dimethyl sulfoxide was discharged into a coagulating bath consisting of dimethyl sulfoxide and water, and the fibers thus obtained were drawn in hot water, washed with water, then dried and further drawn in steam to prepare acrylic fiber strands respectively consisting of 1000 and 3000 filaments of 1.0 denier. Using these acrylic fiber strands there were produced woven and knitted fabrics different in textile weave having a weight per unit area of 90 to 460 g/m$^2$. The fabrics were heat-oxidized for about 50 minutes in air at 270°C and then carbonized for 100 minutes in nitrogen at about 1100°C to obtain carbonized woven and knitted fabrics having a weight per unit area of 100 to 480 g/m$^2$ and a crimp ratio of 0.7 to 75%.

Using the woven and knitted carbon fiber fabrics thus obtained there were formed composite sheets with nylon 6 in the same manner as in Example 1 except that the flame treatment was omitted and that the thickness and laminate number of the nylon 6 sheets were varied. Then, using these composite sheets there were formed cups in the same way as in Example 1 except that the temperature of the cup forming mold was set at 100°C and the molding closing speed was changed to 2, 4, 6 and 8 mm/sec. The state of the molded articles thus obtained and the evaluation results of bending characteristics at their bottom portions are set out in Nos.3-9 of Table 2.

On the other hand, using carbon fiber strands respectively consisting of 1000 and 3000 filaments of 1.0 denier there were produced 8-satin fabrics respectively having weights per unit area of 210 and 400 g/m$^2$ and crimp ratios of 0.1% and 0.2%. Then, using these carbon fiber fabrics there were formed composite sheets with nylon 6 in the same manner as previously noted except that the thickness and laminate number of the nylon 6 sheets were varied, and then from those composite sheets there were formed cups also in the same manner as above. The molded articles thus obtained had such characteristics as shown in Nos.1 and 2 of Table 2.

As shown in Table 2, the molded articles (Nos.3 to 9) reinforced with carbon fiber fabrics having crimp ratios not smaller than 0.5% permit a high-speed molding as compared with the molded articles Nos.1 and 2. The larger the crimp ratio the more marked becomes this tendency, and a very high speed molding was performable at the crimp ratio of 75% (No.9).

Table 2

| No. | Crimp Ratio % | Number of Filaments | Textile Weave | Weight per unit area (g/m$^2$) | Moldability* 2 | 4 | 6 | 8 | Flexural Modulus ton/mm$^2$ | Flexural Strength kg/mm$^2$ |
|-----|------|------|------|------|------|------|------|------|------|------|
| 1 | 0.1 | 1000 | 8-satin | 210 | ◯ | X | X | X | 6.3 | 78 |
| 2 | 0.2 | 3000 | " | 400 | ◯ | X | X | X | 6.2 | 76 |
| 3 | 0.7 | 1000 | plain | 100 | ◯ | ◯ | X | X | 6.0 | 74 |
| 4 | 1.7 | 3000 | 2/2 twill | 330 | ◯ | ◯ | X | X | 6.1 | 77 |
| 5 | 2.1 | 1000 | 8-satin | 210 | ◯ | ◯ | X | X | 5.9 | 69 |
| 6 | 3.4 | 3000 | plain | 350 | ◯ | ◯ | ◯ | X | 6.2 | 71 |
| 7 | 4.8 | 3000 | 2/2 twill | 480 | ◯ | ◯ | ◯ | X | 6.0 | 75 |
| 8 | 5.2 | 1000 | plain | 170 | ◯ | ◯ | ◯ | X | 6.1 | 74 |
| 9 | 75 | 1000 | plain knitting | 195 | ◯ | ◯ | ◯ | ◯ | 2.6 | 40 |

- 16 -

0042006

*) At the mold closing speeds (mm/sec) indicated
below the column

○ : A molded article having a good appearance
was obtained.

X : Fiber-cutting occurred.


Industrial Utilizability

As set forth hereinbefore, carbon fiber reinforced
thermoplastic molded articles obtained as compression molded
articles having a dish-like, vessel-like or other three-
dimensional structure, as elongated molded articles having
an desired cross section and as tubular molded articles
are produced in excellent productivity according to the
efficient molding process of this invention, are light and
far superior particularly in mechanical properties such as
elastic modulus and Young's modulus to conventional thermoplastic resin injection moldings reinforced with chopped
carbon fiber and are useful in various applications.

— 17 —

What is claimed is:

1.   Method for preparing a carbon fiber reinforced thermoplastic resin molded article, characterized in that a composite sheet formed by incorporating a fabric consisting substantially of carbon fiber filaments with a thermoplastic resin is shaped into a desired form at a temperature not lower than the melting point or softening point of said thermoplastic resin and below the decomposition temperature thereof and then cooled.

2.   Method for preparing a carbon fiber reinforced thermoplastic resin molded article as defined in claim 1, wherein said fabric is a woven fabric consisting essentially of continuous carbon fiber filaments.

3.   Method for preparing a carbon fiber reinforced thermoplastic molded article as defined in claim 1, wherein said fabric is a nonwoven fabric consisting of continuous carbon fiber filaments.

4.   Method for preparing a carbon fiber reinforced thermoplastic resin molded article as defined in any of claims 1 through 3, wherein said carbon fiber fabric contained in said composite sheet consists essentially of carbon fibers having a crimp ratio of 0.5% to 80%.

5.   Method for preparing a carbon fiber reinforced thermoplastic resin molded article as defined in any of claims 1 through 4, wherein the volume fraction of said carbon fiber fabric contained in said composite sheet is in the range of from 5% to 70%.

6.      Method for preparing a carbon fiber reinforced thermoplastic resin molded article as defined in any of claims 1 through 5, wherein said thermoplastic resin is a polyamide.

7.      Method for preparing a carbon fiber reinforced thermoplastic resin molded article as defined in any of claims 1 through 5, wherein said thermoplastic resin is a polyester.

8.      Method for preparing a carbon fiber reinforced thermoplastic resin molded article as defined in any of claims 1 through 5, wherein said thermoplastic resin is a polycarbonate.

9.      Method for preparing a carbon fiber reinforced thermoplastic resin molded article as defined in any of claims 1 through 5, wherein said thermoplastic resin is a polyamideimide.

10.      Method for preparing a carbon fiber reinforced thermoplastic resin molded article as defined in any of claims 1 through 5, wherein said thermoplastic resin is polyphenylene sulfide.

11.      Method for preparing a carbon fiber reinforced thermoplastic resin molded article as defined in any of claims 1 through 5, wherein said thermoplastic resin is polysulfone.

12.      Method for preparing a carbon fiber reinforced thermoplastic resin molded article as defined in any of claims 1 through 11, wherein said carbon fiber fabric and said thermoplastic resin are incorporated according to the

heat press method.

13. Method for preparing a carbon fiber reinforced thermoplastic resin molded article as defined in any of claims 1 through 11, wherein said carbon fiber fabric and said thermoplastic resin are incorporated according to the extrusion coating method using a crosshead die.

14. Method for preparing a carbon fiber reinforced thermoplastic resin molded article as defined in any of claims 1 through 11, wherein said carbon fiber fabric and said thermoplastic resin are incorporated according to the extrusion laminating method.

15. Method for preparing a carbon fiber reinforced thermoplastic resin molded article as defined in any of claims 1 through 14, wherein said molding is performed by compression molding using a matched die.

16. Method for preparing a carbon fiber reinforced thermoplastic resin molded article as defined in any of claims 1 through 14, wherein said molding is performed by bending.

# INTERNATIONAL SEARCH REPORT

International Application No PCT/JP80/00300

## I. CLASSIFICATION OF SUBJECT MATTER (if several classification symbols apply, indicate all) ³

According to International Patent Classification (IPC) or to both National Classification and IPC

Int. Cl.³  B29D 3/02

## II. FIELDS SEARCHED

### Minimum Documentation Searched ⁴

| Classification System | Classification Symbols |
|---|---|
| I P C | B29C 3/02, B32B 5/00, C08J 5/24 |

### Documentation Searched other than Minimum Documentation to the Extent that such Documents are Included in the Fields Searched ⁶

| | |
|---|---|
| Jitsuyo Shinan Koho | 1950 – 1980 |
| Kokai Jitsuyo Shinan Koho | 1971 – 1980 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP, B1, 48-18576,  1973-6-7, column 4<br><br>SANYO ELECTRIC CO., LTD. | 1 – 16 |
| A | JP, A, 50-10870,  1975-2-4, P1 – 3<br><br>NITTO ELECTRIC INDUSTRIAL CO., LTD. | 1 – 16 |
| P | JP, A, 55-137953,  1980-10-28<br><br>Asahi Glass Co., Ltd. | 1 – 16 |

* Special categories of cited documents: ¹⁵

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search ² | Date of Mailing of this International Search Report ³ |
|---|---|
| March 2, 1981 (02.03.81) | March 9, 1981 (09.03.81) |

| International Searching Authority ¹ | Signature of Authorized Officer ²⁰ |
|---|---|
| Japanese Patent Office | |

Form PCT/ISA/210 (second sheet) (October 1977)